# EUROPEAN PATENT APPLICATION

(11) **EP 4 614 772 A1**
(43) Date of publication of application: **10.09.2025**
(21) Application number: 24161779.4
(22) Date of filing: 06.03.2024
(51) Int. Cl.: H02K 3/24, H02K 9/197, H02K 1/20, H02K 3/50

(54) **E-MACHINE WITH SEAL SUPPORT ARRANGEMENT FOR DIRECTLY-COOLED WINDINGS**

(71) Applicant: Garrett Transportation I Inc., Torrance, CA 90504 (US)
(72) Inventor: Kachlik, Petr, Brno (CZ); Tomanec, Filip, Nivnice (CZ); Chmelicek, Petr, Brno (CZ); Yang, Tsu-Ang, Brno (CZ); Kadrnka, Jakub, Brno (CZ); Slama, David, Brno (CZ)
(74) Representative: Ingrassia, Fisher & Lorenz UK Ltd.

(57) **Abstract**

An e-machine includes stator core with slots that receives stator windings and a fluid coolant for cooling the windings. The e-machine also includes a seal support arrangement with a first wall member, a first seal member, a second wall member, and second seal member. The first wall member defines a first flow chamber that receives first end members of the stator windings. The first seal member is sealed against the first wall member to provide a first seal for the first flow chamber. Additionally, the second wall member defines a second flow chamber that receives second end members of the stator windings. The second seal member is sealed against the second wall member to provide a second seal for the second flow chamber. A flow path for coolant extends in a downstream direction from the first flow chamber, along the slots, to the second flow chamber to cool the windings.

## Description

### TECHNICAL FIELD

The technical field generally relates to an e-machine and, more particularly, to an e-machine with a seal support arrangement for directly-cooled windings.

### BACKGROUND

E-machines, such as electric motors, electric generators, and combination motor/generators, are provided for a variety of uses. For example, electric traction motors are proposed for electric vehicles, locomotives, and the like.

Some e-machines may generate heat during operation, may operate in high-temperature environments, etc. Elevated temperatures may hinder performance and/or cause other disadvantages. Thus, e-machine systems are proposed that include features configured to cool the e-machine. However, providing such cooling features remains challenging. There may be detrimental increases in costs, part count, device complexity, size, bulkiness, and/or weight if these cooling features are included.

Thus, there remains a need for an e-machine system that provides effective cooling. There remains a need for an e-machine system, wherein the cooling features are provided in an e-machine that is relatively compact and low-weight. There is also a need for such an e-machine that has high manufacturing efficiency for reduced costs and manufacturing time. Other desirable features and characteristics will become apparent from the subsequent detailed description and the appended claims, taken in conjunction with the accompanying drawings and this background.

### BRIEF SUMMARY

In an example embodiment, an e-machine is disclosed that includes a stator core having a first axial end and a second axial end that are spaced apart along a longitudinal axis. The stator core includes a slot that extends between the first axial end and the second axial end. Furthermore, the e-machine includes a plurality of windings with a portion received in the slot and extending between the first axial end and the second axial end. The plurality of windings includes a plurality of first end members disposed outside the stator core at the first axial end, and the plurality of windings includes a plurality of second end members disposed outside the stator core at the second axial end. Furthermore, the e-machine includes an e-machine housing that houses the stator core and the plurality of windings. The e-machine housing includes a first axial face that faces the first axial end and a second axial face that faces the second axial end. The e-machine housing and the slot of the stator core are configured to receive a flow of coolant. The e-machine further includes a seal support arrangement with a first wall member, a first seal member, a second wall member, and second seal member. The first wall member extends between the first axial face and the first axial end to define a first flow chamber. The first seal member is sealed against the first wall member to provide a first seal for the first flow chamber. The first flow chamber receives the first end members. Additionally, the second wall member extends between the second axial face and the second axial end to define a second flow chamber. The second seal member is sealed against the second wall member to provide a second seal for the second flow chamber. The second flow chamber receives the second end members. Furthermore, the e-machine housing, the seal support arrangement, and the slot of the stator core are cooperatively defining a flow path for the flow of coolant. The flow path extends in a downstream direction from the first flow chamber, along the slot, to the second flow chamber to cool the plurality of windings.

In some embodiments, at least one of the first seal member and the second seal member is resiliently compressed against the stator core in the seal support arrangement.

Furthermore, in some embodiments, at least one of the first seal member and the second seal member includes a notch that is fluidly coupled with the slot of the stator core.

Additionally, in some embodiments, at least one of the first wall member and the second wall member is cylindrical, hollow, and centered on the longitudinal axis. The at least one of the first wall member and the second wall member includes a tapered wall that tapers in radius along the longitudinal axis.

In some embodiments, at least one of the first wall member and the second wall member is a projection of the e-machine housing. The projection is integrally attached to one of the first axial face and the second axial face and extends toward the other of the first axial face and the second axial face.

In some embodiments, the first seal member is resiliently pressed between the first axial end and the first wall member to define an inner sealed area of the first flow chamber. Also, the e-machine includes a third seal member that is resiliently pressed between the first wall member and the first axial face to define an outer sealed area of the first flow chamber.

Moreover, in some embodiments, the second seal member is resiliently pressed between the second axial end and the second wall member to define an inner sealed area of the second flow chamber. Also, the e-machine includes a fourth seal member that is resiliently pressed between the second wall member and the second axial face to define an outer sealed area of the second flow chamber.

Furthermore, in some embodiments, the e-machine housing includes a first housing member and a second housing member that cooperatively house the stator core and the plurality of windings. The second housing member is removably attached to the first housing member to resiliently compress the first wall member against the first seal member and to resiliently compress the second wall member against the second seal member.

Also, in some embodiments, the e-machine includes a selection member that extends through the e-machine housing and that abuts the seal support arrangement to selectively compress the seal support arrangement together.

Moreover, in some embodiments, the first seal member is disposed in an axial direction along the longitudinal axis between the first axial end and the first wall member. The first wall member includes an inner radial wall that extends over an inner radial area of the first end windings member and an outer axial wall that extends over an outer axial area of the first end windings member. The selection member abuts against the outer axial wall for compressing the seal support arrangement together.

In some embodiments, the e-machine includes a flow channel extending continuously through the stator core, the first seal member, and the second seal member to fluidly connect the first flow chamber and the second flow chamber. The flow channel is spaced apart radially from the slot with respect to the longitudinal axis.

Additionally, a method of manufacturing an e-machine is disclosed. The method includes providing a stator core with a first axial end and a second axial end that are spaced apart along a longitudinal axis. The stator core includes a slot that extends between the first axial end and the second axial end. The method also includes receiving a portion of a plurality of windings in the slot. The portion extends between the first axial end and the second axial end. The plurality of windings includes a plurality of first end members disposed outside the stator core at the first axial end and a plurality of second end members disposed outside the stator core at the second axial end. The method also includes housing the stator core and the plurality of windings in an e-machine housing. The e-machine housing includes a first axial face that faces the first axial end and a second axial face that faces the second axial end. The e-machine housing and the slot of the stator core is configured to receive a flow of coolant. The method further includes a arranging a seal support arrangement with a first wall member, a first seal member, a second wall member, and second seal member in the e-machine housing, including extending the first wall member between the first axial face and the first axial end to define a first flow chamber. The first seal member is sealed against the first wall member to provide a first seal for the first flow chamber, and the first flow chamber receives the first end members. The method also includes extending the second wall member between the second axial face and the second axial end to define a second flow chamber, the second seal member sealed against the second wall member to provide a second seal for the second flow chamber, and the second flow chamber receives the second end members. The method further includes cooperatively defining a flow path with the e-machine housing, the seal support arrangement, and the slot of the stator core for the flow of coolant. The flow path extends in a downstream direction from the first flow chamber, along the slot, to the second flow chamber to cool the plurality of windings.

In some embodiments, the method includes aligning a notch of the first seal member with the slot and layering the first seal member on the first axial end of the stator core.

Furthermore, in some embodiments, the method includes selectively adjusting a selection member that extends through the e-machine housing and that abuts the seal support arrangement to selectively compress the seal support arrangement together.

Also, in an embodiment, an e-machine system is disclosed that includes the e-machine and a fluid system that is fluidly connected to an inlet of the e-machine and an outlet of the e-machine. The fluid system configured to circulate the flow through the e-machine.

### BRIEF DESCRIPTION OF DRAWINGS

The various embodiments will hereinafter be described in conjunction with the following drawing figures, wherein like numerals denote like elements, and wherein:
FIG. 1 is a schematic illustration of an e-machine system according to example embodiments of the present disclosure;
FIG. 2 is a longitudinal cross-sectional view of an e-machine of the e-machine system of FIG. 1 according to example embodiments of the present disclosure;
FIG. 3 is an axial cross-sectional view of a stator member and housing of the e-machine taken along the line 3-3 of FIG. 2;
FIG. 4 is an axial cross-sectional view of a stator member and housing of the e-machine taken along the line 4-4 of FIG. 2;
FIG. 5 is a detail longitudinal cross-sectional view of the stator member and housing taken from the area indicated in FIG. 2;
FIG. 6 is a detail longitudinal cross-sectional view of the stator member and housing taken from the area indicated in FIG. 2;
FIG. 7 is a longitudinal cross-sectional view of an e-machine of the e-machine system of FIG. 1 according to additional example embodiments of the present disclosure;
FIG. 8 is a detail longitudinal cross-sectional view of the stator member and housing taken from the area indicated in FIG. 7; and
FIG. 9 is a detail longitudinal cross-sectional view of the stator member and housing taken from the area indicated in FIG. 7.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

Broadly, example embodiments disclosed herein include an e-machine, such as an electric motor, that may be incorporated within an e-machine system. A stator member of the e-machine may include a core (i.e., stator core, core member, etc.) with a plurality of slots. The stator member may also include a plurality of windings that are partly received in respective ones of the slots and that are partly disposed outside the core at the axial ends. The e-machine may also include a housing (i.e., an e-machine housing, a stator housing, etc.) that houses the core and the plurality of windings of the stator core. The e-machine may be fluidly coupled to a coolant system that provides fluid coolant through the housing and the stator core, for example, for direct cooling of the plurality of windings.

In some embodiments, the e-machine may include a seal support arrangement that partly defines a fluid path for the coolant. The seal support arrangement may also define one or more fluid chambers, manifolds, plenums, etc. for the fluid coolant. As such, the seal support arrangement may include one or more walls, barriers, dams, etc. that define a fluid boundary for the fluid path. The seal support arrangement may also hermetically seal the respective fluid boundary (i.e., may provide one or more fluid seals thereto). In some embodiments, the seal support arrangement may also provide structural support for the stator, the core, and/or other members of the e-machine. The seal support arrangement may, in some embodiments, at least partly define a first flow chamber between a first axial end of the core and a first axial face of the e-machine housing. The seal support arrangement may, in some embodiments, at least partly define a second flow chamber between a second axial end of the core and a second axial face of the e-machine housing. A fluid inlet into the housing may be disposed at and fluidly connected to the first flow chamber. A fluid outlet out from the housing may be disposed at and fluidly connected to the second flow chamber. Accordingly, one or more fluid flow paths may be defined from the first flow chamber, through the slot, to the second flow chamber, and the fluid may directly cool the plurality of windings that are included along this flow path. The first flow chamber may extend circumferentially about the axis at the first axial end of the core for distributing the fluid coolant to a plurality of slots in the core. The second flow chamber may extend circumferentially about the axis at the second axial end of the core for receiving fluid coolant from the plurality of slots. Thus, the e-machine may be efficiently and effectively cooled for high performance. Also, the cooling features may be included in a compact package and with a low part count. The e-machine may be manufactured efficiently as well.

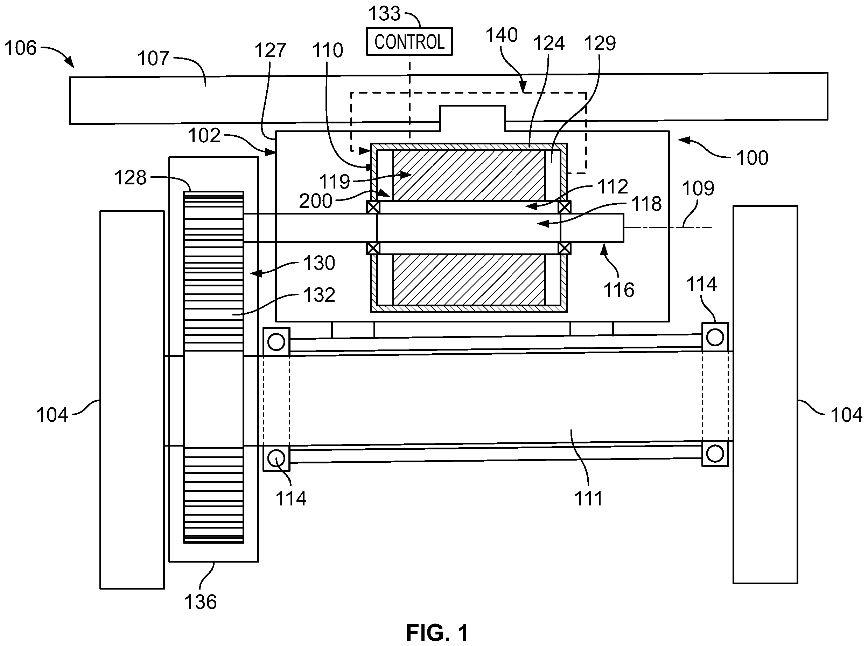

FIG. 1 is a schematic view of an e-machine system 100 according to example embodiments of the present disclosure. The e-machine system 100 may have a variety of configurations. In some embodiments, the e-machine system 100 may be configured as a traction drive system 102 that is included, for example, on a vehicle 106. Thus, the traction drive system 102 may be configured for driving one or more wheels 104 of the vehicle 106. More specifically, the wheels 104 may be included at opposite ends of an axle 111, and a chassis 107 may be supported on the wheels 104 by a suspension system (not shown). The vehicle 106 may be an electric car, truck, van, motorcycle, boat, or other vehicle. However, it will be appreciated that the e-machine system 100 may be configured otherwise without departing from the scope of the present disclosure.

Generally, the e-machine system 100 may include an e-machine 110, such as an electric motor 112. It will be appreciated that the e-machine 110 may be configured otherwise. The e-machine 110 may be configured as an electric generator in some embodiments. Furthermore, the e-machine 110 may be operable in some modes as a motor and in additional modes as a generator. The e-machine 110 may include a rotor member 118 and a stator member 119 that are housed within a cavity 129 of an e-machine housing 124.

The rotor member 118 may be supported on a shaft 116, and the shaft 116 may be supported for rotation about an axis 109 (i.e., rotation axis 109) within the e-machine housing 124. The stator member 119 of the e-machine 110 may be fixed within the e-machine housing 124 and may surround the rotor member 118 and the shaft 116. In embodiments in which the e-machine 110 is an electric motor 112, the shaft 116 may be referred to as an output shaft 116 of the electric motor 112. In some embodiments, a gear connection member 128 (e.g., a gear, a spline on the shaft 116, or other part with gear teeth features) may be operably supported on the shaft 116.

Also, the e-machine system 100 may include a transmission 130. The transmission 130 may generally include a geartrain 132 that is housed within a gearbox housing 136. The gearbox housing 136 may be attached (e.g., fixed) to a side wall 127 of the e-machine housing 124.

The geartrain 132 may be of any suitable type. The geartrain 132 may operatively connect the e-machine 110 and the axle 111 and may transmit power therebetween. The e-machine 110 may be coupled to the wheels 104 via the transmission 130. The geartrain 132 may be attached to the gear connection member 128 and to the axle 111. The gearbox housing 136 and the e-machine housing 124 may be moveably supported on the axle 111 by one or more bearings 114 (e.g., a bearing sleeve, suspension tube, etc.) such that the axle 111 may rotate relative thereto.

During operation, the electric motor 112 may rotatably drive the shaft 116 and the gear connection member 128 supported thereon. This rotational power may transfer to the geartrain 132, which may transmit the power to the axle 111 to rotate the wheels 104 and propel the vehicle 106. These operations may be controlled by a control system 133. The control system 133 may control speed of the motor 112 and/or other functions of the motor 112.

Furthermore, the e-machine system 100 may include a fluid coolant system 140. The fluid coolant system 140 may be configured for circulating a fluid, such as a liquid fluid coolant (e.g., coolant oil). The fluid coolant system 140 may be coupled to the e-machine 110 as will be discussed. The coolant may flow through the e-machine 110, through the housing 124, and/or through the stator member 119 to provide cooling thereto.

Moreover, as represented schematically in FIG. 1, the e-machine 110 may include a seal support arrangement 200. As will be discussed in detail, the seal support arrangement 200 may include at least one wall member that defines at least one flow chamber, plenum, manifold, etc. within the e-machine 110. The seal support arrangement 200 may further include at least one seal member that provides a seal for the chamber, plenum, manifold, etc. The seal support arrangement 200 may be useful for defining one or more flow paths for the fluid coolant system 140 through the e-machine 110. In some embodiments, the seal support arrangement 200 may define one or more flow paths that extend continuously through the housing 124 from one longitudinal end (i.e., axial end) of the stator member 119, along the axis 109 through the stator member 119, to the opposite longitudinal end of the stator member 119, and out of the housing 124 therefrom. Also, in some embodiments, the seal support arrangement 200 may provide support to the stator member 119, transfer forces between the stator member 119 and the housing 124, etc. The seal support arrangement 200 may allow for effective and efficient cooling of the e-machine 110. The seal support arrangement 200 may also be convenient to manufacture and assemble with the other components of the e-machine 110 and e-machine system 100. The seal support arrangement 200 may also be compact and lightweight. Other advantages are discussed below.

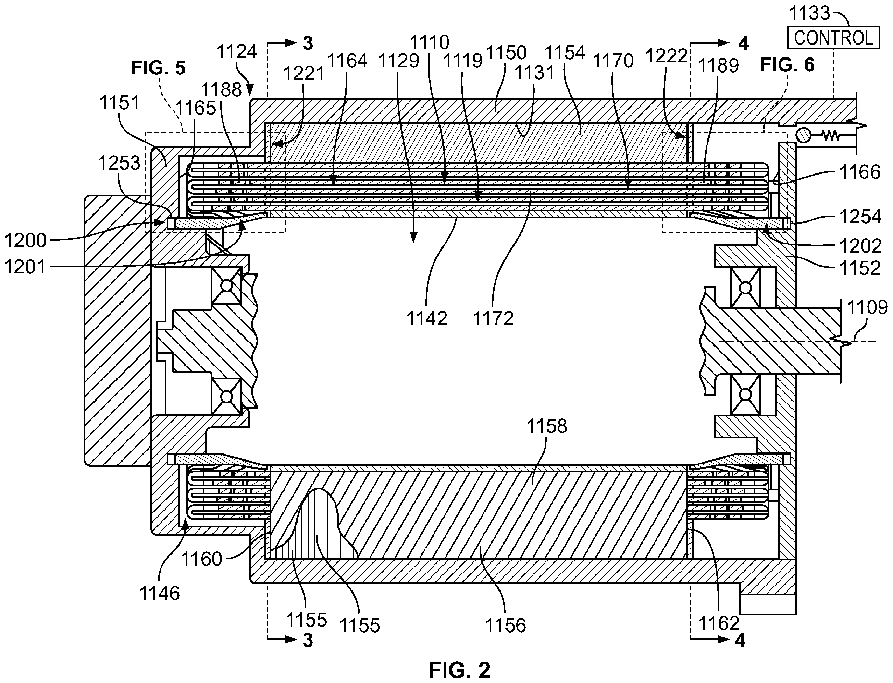

Referring now to FIGS. 2-6, the e-machine 1110, the seal support arrangement 1200, and other features of the e-machine system 1100 are illustrated according to example embodiments. The e-machine 1110 may be incorporated in the e-machine system 100 of FIG 1. Components that correspond to those discussed above in relation to FIG. 1 are indicated with corresponding reference numbers increased by 1000.

As represented in FIGS. 2-4, the e-machine housing 1124 may be cylindrical and hollow. The e-machine housing 1124 may include an outer radial wall 1150, a first axial wall 1151, and a second axial wall 1152. The outer radial wall 1150 may extend in a circumferential direction about the axis of rotation 1109 and may extend longitudinally between the first axial wall 1151 and the second axial wall 1152. The outer radial wall 1150 may also define an inner radial surface 1131 that faces radially toward the axis 1109. The first axial wall 1151 and second axial wall 1152 may be disc-like and may extend transverse to the axis 1109. The first axial wall 1151 may include a first interior face 1165 that faces along the axis 1109 toward the interior of the housing 1124. The second axial wall 1152 may include a second interior face 1166 that faces in an opposite direction along the axis 1109 toward the interior of the housing 1124 and toward the first interior face 1165.

In some embodiments, the outer radial wall 1150 may be integrally connected to the first axial wall 1151 in a one-piece, unitary outer housing, and the second axial wall 1152 may be removably attached thereto. The outer radial wall 1150, first axial wall 1151, and second axial wall 1152 may collectively define the cavity 1129 (i.e., motor cavity, stator cavity, etc.). The cavity 1129 may be substantially cylindrical and may be centered on the axis 1109. The cavity 1129 may house the stator member 1119 of the electric motor 1112.

The stator member 1119 (FIG. 2) may include a core 1154 (i.e., stator core, etc.). The core 1154 may be hollow and cylindrical so as to include an outer radial area 1156, an inner radial area 1158, a first axial end 1160, and a second axial end 1162. The first axial end 1160 and the second axial end 1162 may be spaced apart along the axis 1109. The core 1154 may comprise a plurality of flat, disc-like laminations 1155 (two of which are indicated in FIG. 2). The laminations 1155 may be formed from a metallic material in some embodiments. The laminations 1155 may be stacked together and arranged along the axis 1109 to collectively define the core 1154. One of the laminations 1155 may define the first axial end 1160, another lamination 1155 may define the second axial end 1162, and the plurality of laminations 1155 may collectively define the outer radial area 1156 and the inner radial area 1158 of the core 1154. The laminations 1155 may provide manufacturing benefits, such as improved manufacturability, and/or the laminations 1155 may provide improved electromagnetic performance for the e-machine 1110.

The e-machine housing 1124 may house the stator member 1119. The inner radial surface 1131 of the outer radial wall 1150 may oppose the outer radial area 1156 of the stator core 1154.

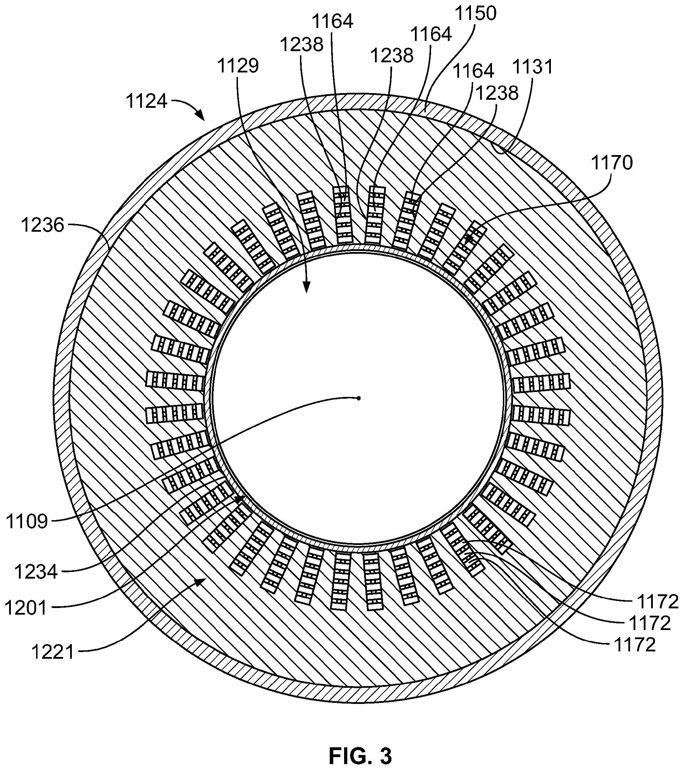

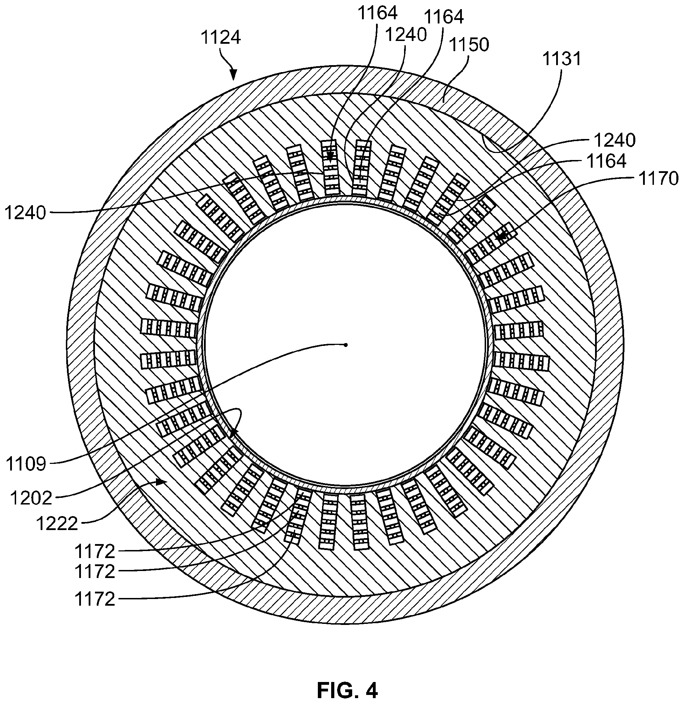

As shown in FIGS. 2-4, the core 1154 may define slots 1164 (i.e., grooves, passages, etc.). It will be appreciated that the laminations 1155 of the core 1154 may individually include notches that align along the axis 1109 when the laminations 1155 are stacked together, thereby collectively defining the slots 1164. The slots 1164 may extend longitudinally, substantially parallel to the axis 1109. As shown in FIGS. 3 and 4, the plurality of slots 1164 may be disposed in spaced arrangement (e.g., equally spaced) about the axis of rotation 1109 and may radiate from the axis of rotation 1109. The slots 1164 may have a rectangular cross section (FIGS. 3 and 4) and may extend continuously from the first axial end 1160 to the second axial end 1162 (FIG. 2). Accordingly, the slots 1164 may be open at the first axial end 1160 and the second axial end 1162 as shown in FIG. 2.

The stator core 1154 may also include a radial wall member 1142 (FIG. 3). The radial wall member 1142 may be cylindrical, hollow, and substantially circular in a cross-section taken normal to the axis 1109. The radial wall member 1142 may be centered about the axis 1109 and may extend from the first axial end 1160 to the second axial end 1162. The radius of the radial wall member 1142 may remain substantially constant along its axial length. The radial wall member 1142 may extend in a circumferential direction to define the inner radial area 1158 of the core 1154 and to close off the slots 1164. In some embodiments, the radial wall member 1142 may be press-fit into the core 1154.

As shown in FIGS. 2-4, the stator member 1119 may further include a plurality of windings 1170 (i.e., winding members, wiring members, etc.). The windings 1170 may be electrically conductive and may comprise a plurality of elongate wires, segments, lines, etc. The windings 1170 may extend about and through the core 1154. The windings 1170 may be arranged in a plurality of coils, wraps, curved routings, etc. that extend back-and-forth between the first and second axial ends 1160, 1162 of the stator core 1154 and between different ones of the slots 1164.

The windings 1170 may be at least partially received in the slots 1164. More specifically, the windings 1170 may include a plurality of longitudinal segments 1172 (FIG. 2) that are received in the slots 1164 of the stator core 154. The longitudinal segments 1172 may extend generally along the axis 1109 within respective slots 1164 between the first axial end 1160 and the second axial end 1162 of the core 1154. It will be appreciated that there may be any number of longitudinal segments 1172 in the slots 1164. As shown in FIGS. 3 and 4, one of the slots 1164 may include a plurality of segments 1172 (e.g., six segments 1172) that are stacked in the radial direction therein.

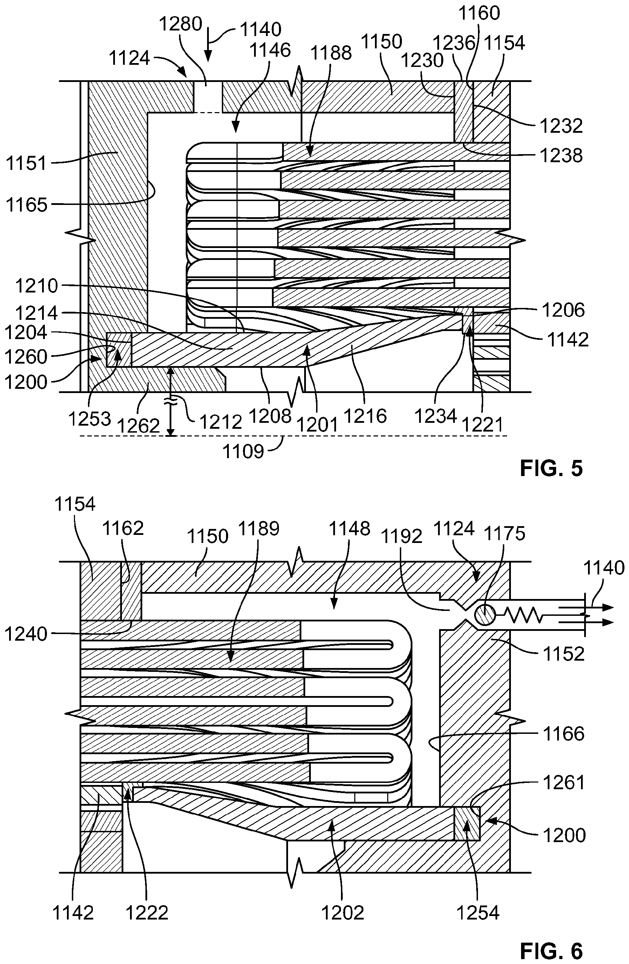

The windings 1170 may also include a plurality of first end members 1188 (FIGS. 2 and 5) that extend out from and back toward the first axial end 1160 of the core 1154. The windings 1170 may further include a plurality of second end members 1189 (FIGS. 2 and 6) that extend out from and back toward the second axial end 1162 of the core 1154. The first end members 1188 may electrically connect respective pairs of the longitudinal segments 1172, and the second end members 1189 may electrically connect respective pairs of the longitudinal segments 1172 on the other axial end of the core 1154. Also, there may be an electrical connector of a known type that electrically and operatively connects the windings 1170 to the control system 1133 for operation of the motor 1112.

The seal support arrangement 1200 is also shown according to example embodiments. As shown, the seal support arrangement 1200 may include a first wall member 1201 (FIGS. 2 and 5) and/or a second wall member 1202 (FIGS. 2 and 6). As shown, the first wall member 1201 and/or the second wall member 1202 may be cylindrical and hollow and centered on the axis 1109. The first and/or second wall member 1201, 1202 may be rigid and strong. The first and/or second wall members 1201, 1202 may be nonmagnetic (i.e., formed of a nonmagnetic material) to enhance motor performance. The first and/or second wall members 1201, 1202 may be formed of a polymeric material in some embodiments.

As shown in FIG. 5, the first wall member 1201 may include a first end 1204 and a second end 1206, which are separated along the axis 1109. The first wall member 1201 may also include an inner radial surface 1208 that faces radially toward the axis 1109 and an outer radial surface 1210 that faces radially away from the axis 1109. A radius 1212 of the first wall member 1201 (e.g., measured radially from the axis 1109 to the inner radial surface 1208) may remain substantially constant for a first portion 1214 of the first wall member 1201. The first wall member 1201 may also include a tapered wall 1216 that tapers in radius 1212 along length thereof (measured along the axis 1109). In some embodiments the tapered wall 1216 may taper outward in radius 1212 as the first wall member 1201 extends from the first portion 1214 to the second end 1206.

The second wall member 1202 may be substantially similar to the first wall member 1201. The second wall member 1202 may share mirror-image symmetry with the first wall member 1201 across an imaginary plane that is normal to the axis 1109.

The seal support arrangement 1200 may further include a first seal member 1221 (FIGS. 2, 3, and 5) and a second seal member 1222 (FIGS. 2, 4, and 6). The first and/or second seal members 1221, 1222 may be flat, rounded, annular, disc-shaped gasket. The first and second seal members 1221, 1222 may be disposed normal to the axis 1109. The first and/or second seal members 1221, 1222 may be resiliently compressible with material configured for hermetic or substantially hermetic sealing (e.g., a compressible rubber, foam, polymer, etc.).

As shown in FIGS. 3 and 5, the first seal member 1221 may have a first side 1230, a second side 1232, an inner radial edge 1234, and an outer radial edge 1236. Also, the first seal member 1221 may include a plurality of notches 1238. The notches 1238 may be shaped and arranged about the axis 1109 to correspond to, align with, and fluidly connect with the slots 1164 of the stator core 1154.

The second seal member 1222 may be substantially similar to the first seal member 1221. Thus, as shown in FIG. 4, the second seal member 1222 may include respective notches 1240 that correspond to, align with, and fluidly connect with the slots 1164 of the stator core 1154.

Furthermore, the seal support arrangement 1200 may include a third seal member 1253 (FIGS. 2 and 5) and a fourth seal member 1254 (FIGS. 2 and 6). In some embodiments, the third and/or fourth seal members 1253, 1254 may be compressible O-ring seals that are centered about the axis 1109.

As shown in FIGS. 2, 5, and 6, the seal support arrangement 1200 may be disposed within the e-machine housing 1124. The seal support arrangement 1200 may extend axially (along the axis 1109) through the cavity 1129 between the interior of the housing 1124 and the stator core 1154 on both the first axial end 1160 and the second axial end 1162.

More specifically, the first seal member 1221 may be layered over the first axial end 1160 of the stator core 1154 with the notches 1238 aligned with the slots 1164. The second seal member 1222 may be similarly layered over the second axial end 1162 such that the notches 1240 are aligned with respective ones of the slots 1164. Additionally, the third seal member 1253 may be received within an annular groove 1260 in the first interior face 1165 of the wall 1151 of the housing 1124. The fourth seal member 1254 may be received in an annular groove 1261 of the second interior face 1166 of the second axial wall 1152.

Additionally, in the seal support arrangement 1200, the first wall member 1201 may extend between the first interior face 1165 and the first axial end 1160. The first end 1204 of the first wall member 1201 may abut against, resiliently compress against, and substantially hermetically seal against the third seal member 1253 within the groove 1260. The first end 1204 may also be received around a central bore wall 1262 of the housing 1124. The second end 1206 of the first wall member 1201 may abut against, resiliently compress against, and substantially hermetically seal against the first seal member 1221, proximate the inner radial area 1158 and the radial wall member 1142. The outer radial edge 1236 of the first seal member 1221 may also be compressed between the housing 1124 and the first axial end 1160 of the stator core 1154.

As shown in FIG. 6, the seal support arrangement 1200 may be substantially similar at the second axial end 1162 of the stator core 1154. Specifically, the second wall member 1202 may extend between the second interior face 1166 and the second axial end 1162. The second wall member 1202 may compress and seal against the second seal member 1222 at one end and against the fourth seal member 1254 at the other end.

When compressed, the resiliency of the seal members 1221, 1222, 1253, 1254 may provide a pre-load directed axially along the seal support arrangement 1200. In some embodiments, removably attaching the second axial wall 1152 to the outer radial wall 1150 of the housing 1124 coincidentally compresses the seal members 1221, 1222, 1253, 1254 within the seal support arrangement 1200 as described above such that the seal support arrangement 1200 is robustly supported between the housing 1124 and the stator member 1119.

Additionally, the seal support arrangement 1200 may partially define a first flow chamber 1146 that houses the first end members 1188 of the plurality of windings 1170 and a second flow chamber 1148 that houses the second end members 1189 of the plurality of windings 1170. The first flow chamber 1146 may be defined axially between the first axial wall 1151 and the first side 1230 of the first seal member 1221. The first flow chamber 1146 may also be defined radially between the first wall member 1201 and the outer radial wall 1150. The second flow chamber 1148 may be defined axially between the second axial wall 1152 and the second seal member 1222. The second flow chamber 1148 may be defined radially between the second wall member 1202 and the outer radial wall 1150.

The first flow chamber 1146 and the second flow chamber 1148 may be rounded and may extend circumferentially about the axis 1109 (e.g., may be rhombus-shaped). The first seal member 1221 may be resiliently pressed between the first axial end 1160 and the first wall member 1201 to define an inner sealed area of the first flow chamber 1146. The third seal member 1253 may be resiliently pressed between the first wall member 1201 and the first interior face 1165 to define an outer sealed area of the first flow chamber 1146.

The first flow chamber 1146 may be fluidly connected to the slots 1164, e.g., for distributing fluid thereto. Also, the second flow chamber 1148 may be fluidly connected to the plurality of slots 1164, e.g., for receiving fluid therefrom.

The e-machine 1110 may be operatively connected (i.e., fluidly connected) within the fluid coolant system 1140. There may a pump for circulating liquid coolant through the e-machine 1110 and directly over the windings 1170 of the stator member 1119. The e-machine 1110 may include an inlet 1280 (i.e., a fluid inlet) that is connected to the fluid coolant system 1140 and that extends through the housing 1124. In some embodiments, the inlet 1280 may be directed normal to the axis 1109 and into the first flow chamber 1146. Also, the e-machine 1110 may include an outlet 1192 (i.e., a fluid outlet) that extends through the housing 1124 and that is connected to the fluid coolant system 1140. In some embodiments, the outlet 1192 may be directed axially from the second flow chamber 1148.

In some embodiments, the e-machine 1110 may include a valve 1175, for example, within the outlet 1192. The valve 1175 may be a one-way valve 1175 that is biased closed. When fluid pressure in the second flow chamber 1148 reaches a predetermined limit, the valve 1175 may open to allow flow of the fluid through the outlet 1192.

Thus, during operation, fluid coolant may flow from the inlet 1280 into the first flow chamber 1146 and cool the first end members 1188 of the windings 1170. The first flow chamber 146 may operate as an inlet manifold and may distribute the fluid coolant to the plurality of slots 1164 of the stator member 1119. The coolant may flow along the slots 1164 to cool the segments 1172 of the windings 1170. The coolant may flow further downstream, and flow from the slots 1164 may be received in the second flow chamber 148 for further cooling of the second end members 1189. Once the valve 1175 is opened, then the coolant may flow to the outlet 1192 for recirculation through the coolant system 1140.

Accordingly, the e-machine 1110 of the present disclosure may provide effective and efficient cooling. The seal support arrangement 1200 may be included for directing the flow of coolant. The seal support arrangement 1200 may also provide support for the stator member 1119. Also, these features may be provided in a compact, lightweight package that is simple to manufacture and assemble.

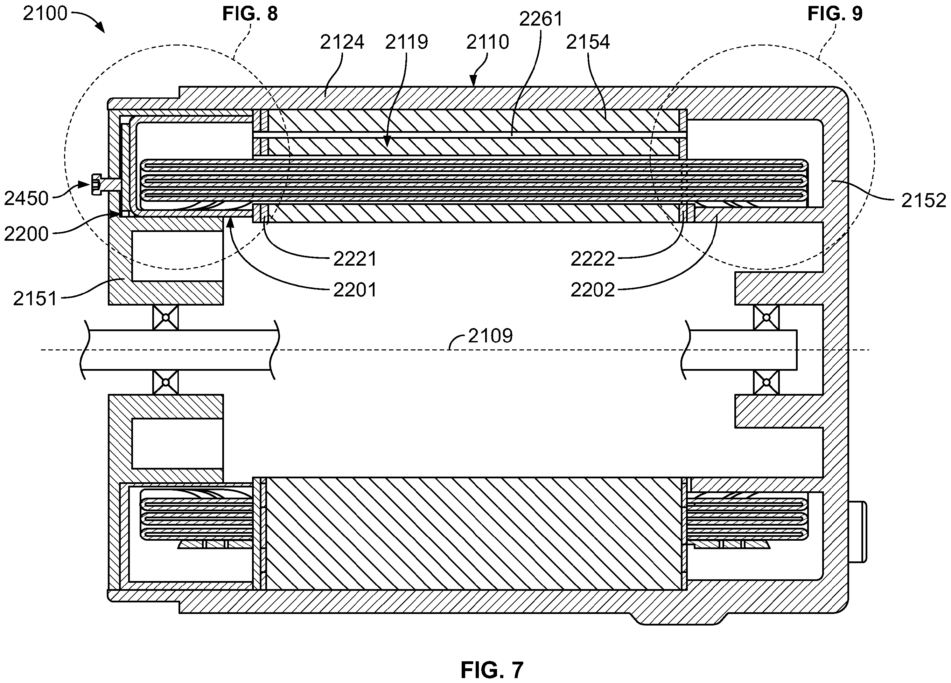

Referring now to FIGS. 7, 8, and 9, the e-machine 2110, the seal support arrangement 2200, and other features of the e-machine system 2100 are illustrated according to additional example embodiments. The e-machine 2110 may be incorporated in the e-machine system 100 of FIG 1. Features of the e-machine 2110 may also be shared and combined with those of the e-machine 1110 of FIGS. 2-6 in some embodiments. Components that correspond to those discussed above in relation to FIGS. 2-6 are indicated with corresponding reference numbers increased by 1000.

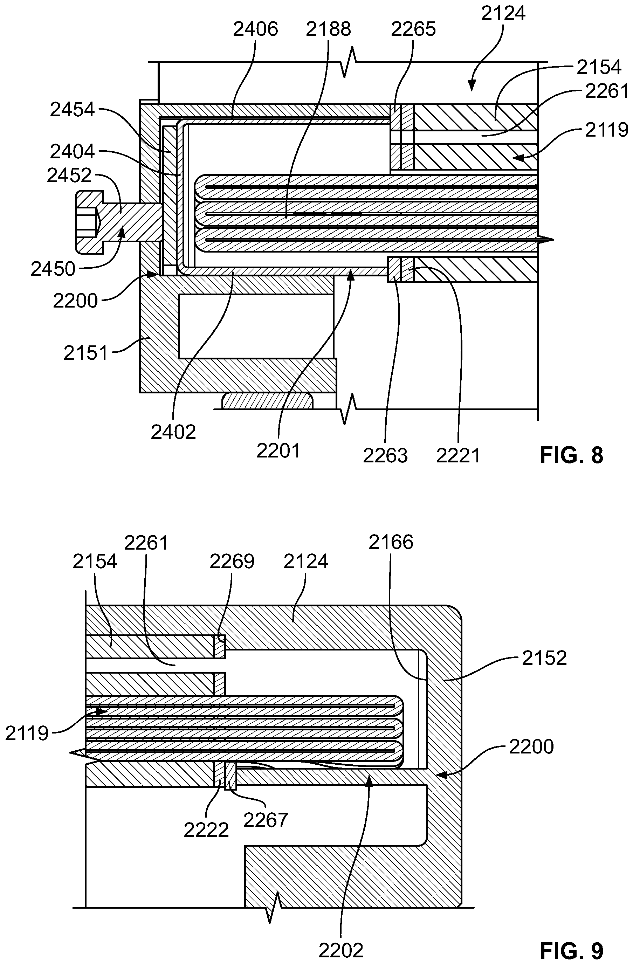

As shown in FIGS. 7 and 8, the first wall member 2201 may be an annular member with a U-shaped cross section taken along the axis 2109. This U-shaped cross section may extend about the axis 2109. As such, the first wall member 2201 may include an inner radial wall 2402 that extends over an inner radial area of the first end members 2188, an outer axial wall 2404 that extends over an outer axial area of the first end members 2188, and an outer radial wall 2406 that extends over an outer radial area of the first end members 2188. In other words, the first end members 2188 may be received within the annular and hollow first wall member 2201.

The first seal member 2221 may be layered on the stator core 2154 similarly to the embodiments of FIGS. 2-6. Also, the first wall member 2201 may include an inner radial seal plate 2263 that is annular and flat and disposed axially between the inner radial wall 2402 and the first seal member 2221. The first wall member 2201 may further include an outer radial seal plate 2265 that is annular and flat and disposed axially between the outer radial wall 2406 and the first seal member 2221.

The seal support arrangement 2200 may further include a selection member 2450, such as a pin 2452 and an abutment plate 2454. The abutment plate 2454 may lie flat over and may abut against the outer axial wall 2404, and the pin 2452 may be threadably attached to the first axial wall 2151. The pin 2452 may extend through the wall 2151 to abut against the abutment plate 2454, which, in turn abuts against the outer axial wall 2404. The pin 2452 may be threadably advanced relative to the outer axial wall 2404 to push the inner and outer radial walls 2402, 2406 against the inner and outer radial seal plates 2263, 2265, respectively, which in turn resiliently compresses the first seal member 2221. Accordingly, the pin 2452 may selectively apply the compression load to the seal support arrangement 2200, wherein the seal support arrangement 2200 is compressed together with the stator member 2119 between the selection member 2450 and the second axial wall 2152.

Additionally, as shown in FIG. 9, the second wall member 2202 may include a projection of the e-machine housing 2124. The second wall member 2202 may be cylindrical and hollow and may be integrally attached at one end to the second face 2166 of the second axial wall 2152, and the second wall member 2202 may project axially therefrom.

The second seal member 2222 may be layered on the core 2154, similar to the embodiments of FIGS. 2-6. Also, the second wall member 2202 may include a second seal plate 2267 (FIG. 9), which is annular and disposed between the second seal member 2222 and the projection of second wall member 2202. Moreover, the housing 2110 may include a shoulder 2269, and the second seal member 2222 may be compressed between the shoulder 2269 and the core 2154 (FIG. 9).

During assembly, the stator member 2119 may be provided in the e-machine housing 2124. Next, the pin 2452 may be selectively adjusted (e.g., by threadably advancing the pin 2452 into the first axial wall 2151). As a result, seal support arrangement 2200 may be compressed together to a selected compressive load. The compressive load may be predetermined and selected to ensure sufficient hermetic sealing while also avoiding risk of fracture or other damage. Accordingly, the selection member 2450 may benefit manufacturability of the e-machine 2110.

Furthermore, in some embodiments, the e-machine 2110 may include an outer flow channel 2261. The outer flow channel 2261 may be an axially straight fluid passage that extends continuously through the core 2154, the first and second seal members 2221, 2222, and the outer radial seal plate 2265. There may be a plurality of outer flow channels 2261 spaced apart circumferentially about the axis 2109. The outer flow channels 2261 may increase fluid flow through the e-machine 2110 for increased cooling capacity.

Thus, the e-machine 110, 1110, 2110 of the present disclosure may provide effective and efficient cooling. The seal support arrangement 200, 1200, 2200 may provide support for the stator member 119, 1119, 2119. Also, these features may be provided in a compact, lightweight package that is simple to manufacture and assemble.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It is understood that various changes may be made in the function and arrangement of elements described in an exemplary embodiment without departing from the scope of the disclosure as set forth in the appended claims.

## Claims

1. An e-machine comprising:
a stator core including a first axial end and a second axial end that are spaced apart along a longitudinal axis, the stator core including a slot that extends between the first axial end and the second axial end;
a plurality of windings with a portion received in the slot and extending between the first axial end and the second axial end, the plurality of windings including a plurality of first end members disposed outside the stator core at the first axial end, the plurality of windings including a plurality of second end members disposed outside the stator core at the second axial end;
an e-machine housing that houses the stator core and the plurality of windings, the e-machine housing including a first axial face that faces the first axial end and a second axial face that faces the second axial end, the e-machine housing and the slot of the stator core configured to receive a flow of coolant;
a seal support arrangement with a first wall member, a first seal member, a second wall member, and second seal member;
the first wall member extending between the first axial face and the first axial end to define a first flow chamber, the first seal member sealed against the first wall member to provide a first seal for the first flow chamber, the first flow chamber receiving the first end members;
the second wall member extending between the second axial face and the second axial end to define a second flow chamber, the second seal member sealed against the second wall member to provide a second seal for the second flow chamber, the second flow chamber receiving the second end members; and
the e-machine housing, the seal support arrangement, and the slot of the stator core cooperatively defining a flow path for the flow of coolant, the flow path extending in a downstream direction from the first flow chamber, along the slot, to the second flow chamber to cool the plurality of windings.

2. The e-machine of claim 1, wherein at least one of the first seal member and the second seal member is resiliently compressed against the stator core in the seal support arrangement.

3. The e-machine of any of the preceding claims, wherein at least one of the first seal member and the second seal member includes a notch that is fluidly coupled with the slot of the stator core.

4. The e-machine of any of the preceding claims, wherein at least one of the first wall member and the second wall member is cylindrical, hollow, and centered on the longitudinal axis, and wherein the at least one of the first wall member and the second wall member includes a tapered wall that tapers in radius along the longitudinal axis.

5. The e-machine of any of the preceding claims, wherein at least one of the first wall member and the second wall member includes a projection of the e-machine housing, the projection being integrally attached to one of the first axial face and the second axial face and extending toward the other of the first axial face and the second axial face.

6. The e-machine of any of the preceding claims, wherein the first seal member is resiliently pressed between the first axial end and the first wall member to define an inner sealed area of the first flow chamber, and further comprising a third seal member that is resiliently pressed between the first wall member and the first axial face to define an outer sealed area of the first flow chamber.

7. The e-machine of any of the preceding claims, wherein the second seal member is resiliently pressed between the second axial end and the second wall member to define an inner sealed area of the second flow chamber, and further comprising a fourth seal member that is resiliently pressed between the second wall member and the second axial face to define an outer sealed area of the second flow chamber.

8. The e-machine of any of the preceding claims, wherein the e-machine housing includes a first housing member and a second housing member that cooperatively house the stator core and the plurality of windings, wherein the second housing member is removably attached to the first housing member to resiliently compress the first wall member against the first seal member and to resiliently compress the second wall member against the second seal member.

9. The e-machine of any of the preceding claims, further comprising a selection member that extends through the e-machine housing and that abuts the seal support arrangement to selectively compress the seal support arrangement together.

10. The e-machine of claim 9, wherein the first seal member is disposed in an axial direction along the longitudinal axis between the first axial end and the first wall member;
wherein the first wall member includes an inner radial wall that extends over an inner radial area of the first end windings member and an outer axial wall that extends over an outer axial area of the first end windings member; and
wherein the selection member abuts against the outer axial wall for compressing the seal support arrangement together.

11. The e-machine of any of the preceding claims, wherein further comprising a flow channel extending continuously through the stator core, the first seal member, and the second seal member to fluidly connect the first flow chamber and the second flow chamber, the flow channel spaced apart radially from the slot with respect to the longitudinal axis.

12. A method of manufacturing an e-machine, comprising:
providing a stator core including a first axial end and a second axial end that are spaced apart along a longitudinal axis, the stator core including a slot that extends between the first axial end and the second axial end;
receiving a portion of a plurality of windings in the slot, the portion extending between the first axial end and the second axial end, the plurality of windings including a plurality of first end members disposed outside the stator core at the first axial end, the plurality of windings including a plurality of second end members disposed outside the stator core at the second axial end;
housing the stator core and the plurality of windings in an e-machine housing, the e-machine housing including a first axial face that faces the first axial end and a second axial face that faces the second axial end, the e-machine housing and the slot of the stator core configured to receive a flow of coolant; and
arranging a seal support arrangement with a first wall member, a first seal member, a second wall member, and second seal member in the e-machine housing, including:
extending the first wall member between the first axial face and the first axial end to define a first flow chamber, the first seal member sealed against the first wall member to provide a first seal for the first flow chamber, the first flow chamber receiving the first end members;
extending the second wall member between the second axial face and the second axial end to define a second flow chamber, the second seal member sealed against the second wall member to provide a second seal for the second flow chamber, the second flow chamber receiving the second end members; and
cooperatively defining a flow path with the e-machine housing, the seal support arrangement, and the slot of the stator core for the flow of coolant, the flow path extending in a downstream direction from the first flow chamber, along the slot, to the second flow chamber to cool the plurality of windings.

13. The method of claim 12, further comprising aligning a notch of the first seal member with the slot and layering the first seal member on the first axial end of the stator core.

14. The method of any of claims 12 and 13, further comprising selectively adjusting a selection member that extends through the e-machine housing and that abuts the seal support arrangement to selectively compress the seal support arrangement together.

15. An e-machine system comprising:
the e-machine of any of claims 1-133; and
a fluid system that is fluidly connected to an inlet of the e-machine and an outlet of the e-machine, the fluid system configured to circulate the flow through the e-machine.
